# EUROPÄISCHE PATENTSCHRIFT

(11) **EP 1 871 570 B1**
(45) Veröffentlichungstag und Bekanntmachung des Hinweises auf die Patenterteilung: **27.08.2008**
(21) Anmeldenummer: 06792271.6
(22) Anmeldetag: 26.09.2006
(51) Int. Cl.: B23Q 37/00, B23P 21/00

(54) **FERTIGUNGSLINIE ZUR FLEXIBLEN BEARBEITUNG VON WERKSTÜCKEN**
PRODUCTION LINE FOR FLEXIBLY MACHINING WORKPIECES
CHÂINE DE PRODUCTION SERVANT À USINER DES PIÈCES AVEC SOUPLESSE

(30) Priorität: 01.10.2005 DE 102005047250
(43) Veröffentlichungstag der Anmeldung: 02.01.2008
(73) Patentinhaber: Supfina Grieshaber GmbH & Co. KG, 77709 Wolfach (DE)
(72) Erfinder: HÜBNER, Torsten, 42659 Solingen (DE)
(74) Vertreter: Dreiss, Fuhlendorf, Steimle & Becker
(86) Internationale Anmeldenummer: PCT/EP2006/009327
(87) Internationale Veröffentlichungsnummer: WO 2007/039186

(56) Entgegenhaltungen:
- EP-A1- 0 554 769
- EP-A2- 0 517 003
- DE-A1- 4 437 364
- DE-A1- 10 012 579
- DE-A1- 10 229 341
- DE-A1- 19 920 950
- US-B1- 6 591 488

## Beschreibung

Die Erfindung betrifft eine Fertigungslinie nach den Oberbegriff des Anspruchs 1, in der Werkstücke in verschiedenen Bearbeitungsschritten bearbeitet werden. Eine solche Fertigungslinie ist aus dem nächstliegenden Stand der Technik DE 102 29 341 A1 bekannt*.*

Wenn an einem Werkstück eine Vielzahl von Bearbeitungsschritten ausgeführt werden müssen, kann dies dadurch erfolgen, dass das Werkstück nacheinander verschiedene Bearbeitungsmaschinen durchläuft und jede der Bearbeitungsmaschinen einen oder mehrere Bearbeitungsschritte vornimmt. Nachteilig an diesem Konzept sind der große Platzbedarf dieser aus verschiedenen Maschinen bestehenden Fertigungslinie und deren geringe Flexibilität bei der Umstellung auf ein anderes Werkstück.

Ein anderes Konzept, das sich in der Praxis bereits bewährt hat, sind Bearbeitungszentren, die einen Rundtisch mit mehreren Werkstückaufnahmen aufweisen, um den herum verschiedene Bearbeitungsstationen angeordnet sind. Durch Drehen des Rundtisches werden die Werkstückaufnahmen von einer Bearbeitungsstation bewegt und mit ihr die in den Werkstückaufnahmen befindlichen Werkstücke.

Aus der DE 103 13 792 A1, der DE 102 29 341 A1, der DE 100 12 579 und der DE 197 41 671 A1 sind Bearbeitungszellen bekannt in die nach Bedarf verschiedene Prozessmodule eingebaut werden können. Dabei können mehrere dieser autarken Bearbeitungszellen in einer Reihe angeordnet werden. Nachteilig an diesem Konzept ist, dass bei diesen Bearbeitungszellen die Werkstücke nacheinander durch die verschiedenen Prozessmodule transportiert und dort bearbeitet werden. Wegen dieser starren Bearbeitungsreihenfolge starr wird die Taktzeit der gesamten Bearbeitungszelle durch die Taktzeit des Prozessmoduls mit der größten Taktzeit bestimmt.

Der Erfindung liegt die Aufgabe zugrunde, die Leistungsfähigkeit herkömmlicher Fertigungslinien und Bearbeitungszellen zu erhöhen und gleichzeitig deren Flexibilität zu verbessern.

Diese Aufgabe wird erfindungsgemäß bei einer Fertigungslinie zur Herstellung von Werkstücken, mit ,mehreren in einer Reihe nebeneinander angeordneten Bearbeitungszellen und mit einer Transporteinrichtung zum Transport des oder der Werkstücke in die Bearbeitungszellen und aus den Bearbeitungszellen heraus, dadurch gelöst, dass alle Bearbeitungszellen einer Fertigungslinie auf einem Basismodul angeordnet sind, dass die Transporteinrichtung eine Führungsschiene umfasst, dass sich die Führungsschiene mindestens über die gesamte Länge des Basismoduls erstreckt, und dass auf der Führungsschiene mindestens ein Transportschlitten angeordnet ist.

Durch die Anordnung der Bearbeitungszellen in einer Reihe entfällt die bei Bearbeitungszentren mit Rundtischen vorhandene Gleichschaltung der Taktzeiten der verschiedenen Bearbeitungszellen, so dass jede der Bearbeitungszellen entsprechend ihrer Leistungsfähigkeit mit Werkstücken beschickt werden kann. Dadurch wird eine optimale Auslastung jeder einzelnen Bearbeitungszelle erzielt.

Im Zusammenhang mit der erfindungsgemäßen Fertigungslinie hat das erfindungsgemäße Transportsystem, welches eine Transportschiene und mindestens einen Transportschlitten umfasst, den Vorteil, dass mit Hilfe des oder der Transportschlitten die Werkstücke nicht von einer Bearbeitungszelle zur nächsten Bearbeitungszelle transportiert werden muss, sondern auch der direkte Transport eines Werkstücks von einer Bearbeitungszelle zur übernächsten oder einer noch weiter entfernten Bearbeitungszelle möglich ist.

Wenn beispielsweise ein Bearbeitungsschritt eine deutlich größere Taktzeit als die anderen Bearbeitungsschritte hat, können bei dem erfindungsgemäßen Linienkonzept zwei Bearbeitungszellen vorgesehen werden, welche parallel zueinander an jeweils verschiedenen Werkstücken die Bearbeitungsschritte oder den Bearbeitungsschritt mit der größeren Taktzeit ausführen. Durch die Parallelbearbeitung von zwei Werkstücken auf zwei Bearbeitungsstationen, die den gleichen Bearbeitungsschritt ausführen, kann im Idealfall durch das Einfügen einer weiteren Bearbeitungszelle die Ausbringungsrate der gesamten Fertigungslinie verdoppelt werden. Dadurch lassen sich erhebliche wirtschaftliche Vorteile realisieren.

Beispielsweise kann, wenn eine Finishbearbeitung eine Taktzeit von 10 Sekunden hat und eine vorgelagerte oder darauffolgende Schleifbearbeitung eine Taktzeit von 30 Sekunden hat, durch den parallelen Einsatz von 2 oder 3 Schleifmodulen die Taktzeit der gesamten Linie auf 15 Sekunden oder sogar auf 10 Sekunden zu begrenzen.

Des weiteren bietet das modulare Konzept der erfindungsgemäßen Fertigungslinie auch erhebliche Vorteile beim Spannen der Werkstücke. Beispielsweise wenn eine erste Planfläche winklig zur Längsachse des Werkstücks bearbeitet werden soll, wird das Werkstück in einem Futter mit langen Spannbacken gespannt. Wenn nun die entgegengesetzte Planfläche parallel zur ersten Planfläche beschliffen werden soll, ist es vorteilhaft, wenn das Werkstück bei diesem zweiten Plan-Finish-Bearbeitungsvorgang kurz gespannt wird, damit sich das Werkstück an seiner ersten Planfläche ausrichtet. Diese unterschiedlichen Werkstückspannaufgaben sind meist nicht in ein Spannmittel integrierbar. Dies ist bei zwei verschiedenen Finishzellen von denen eines die erste Planfläche bearbeitet und das zweite die zweite Planfläche bearbeitet ohne weiteres Möglich, so dass sich eine verbesserte Produktqualität ergibt,

Außerdem ist es bei dem erfindungsgemäßen Linienkonzept möglich, die nebeneinander in Reihe angeordneten Bearbeitungsstationen bei Bedarf auszutauschen, so dass bei der Umstellung der Fertigungslinie die Bearbeitung eines anderen Werkstücks, mit geringem Aufwand eine Fertigungslinie mit optimaler Leistungsfähigkeit hergestellt werden kann.

Für den Hersteller der erfindungsgemäßen Fertigungslinie ergibt sich der Vorteil, dass er eine Vielzahl verschiedenster Fertigungslinien anbieten kann, die aus einer relativ überschaubaren Zahl von standardisierten Bearbeitungszellen bestehen und entsprechend den Wünschen des Kunden konfiguriert werden. Dadurch ergeben sich hinsichtlich der Lieferzeit und der Lagerhaltungskosten erhebliche Vorteile beim Hersteller der erfindungsgemäßen Fertigungslinie.

Dies Modularität hat aber auch für den Anwender erhebliche Vorteile. Wenn nämlich eine Fertigungslinie nicht mehr benötigt wird, weil das darauf hergestellte Produkt nicht mehr benötigt wird, können unter anderem die Bearbeitungsstationen, das Basismodul und das Transportsystem zum Aufbau einer neuen Fertigungslinie wieder verwendet werden. Dadurch werden Investitionskosten eingespart und die Investitionssicherheit für den Käufer dramatisch erhöht. Diese Vorteile sind vor dem Hintergrund ständig sinkender Produktlebenszyklen und dem Vordringen neuer Produktionstechniken. Die erfindungsgemäße Fertigungslinie kann mit geringem Montage-, Zeit- und Kostenaufwand im Rahmen von Produkt - und/oder Technologieumstellungen um- und nachgerüstet werden.

Die Austauschbarkeit und Standardisierung der Bearbeitungszellen wird dadurch weiter gefördert, dass die Bearbeitungszellen auf einem Basismodul angeordnet sind.

Vorteilhafterweise weist das Basismodul ein Raster auf und entspricht die Breite der Bearbeitungszellen dem Rastermaß oder einem ganzzahligen Vielfachen des Rastermaßes. Dadurch wird die Austauschbarkeit der Module innerhalb einer Fertigungslinie beziehungsweise das Konfigurieren einer Fertigungslinie entsprechend den Anforderungen des Kunden weiter vereinfacht und erleichtert.

Es versteht sich von selbst, dass die Bearbeitungszellen sowohl spanende als auch nicht spanende Bearbeitungsverfahren ausführen können. Bei Werkstücken, die mit hoher Präzision hergestellt werden müssen, können auch eine oder mehrere Bearbeitungszellen Messeinrichtungen umfassen, so dass deren Messwerte in die Steuerung der nachfolgenden Bearbeitungszellen Eingang finden. Dadurch wird die Präzision der gefertigten Werkstücke optimiert und die Ausschuss-Quote kann gegen Null gehen.

Nach der Fertigstellung der Werkstücke kann in einer weiteren Bearbeitungszelle die Einhaltung aller relevanten Maße, Oberflächengeometrie und Oberflächenrauhigkeiten geprüft werden, so dass am Ende der Fertigungslinie bereits voll automatisiert eine hundertprozentige Qualitätskontrolle erfolgen kann. Auch die Messwerte dieser Nachmessstation können Eingang in die Steuerung der erfindungsgemäßen Fertigungslinie finden, so dass die Abweichung der Ist-Werte der nachfolgenden Werkstücke von den Soll-Werten weiter verringert wird.

Es hat sich auch bei der erfindungsgemäßen Fertigungslinie als vorteilhaft erwiesen, wenn an den Bearbeitungszellen eine oder mehrere Werkstückspindeln vorgesehen sind, die zur Aufnahme und zum Antrieb eines Werkstückes dienen.

Es hat sich weiter als vorteilhaft erwiesen, wenn die Bearbeitungszellen auch einen Rundtisch mit mehreren Werkstückaufnahmen aufweist, mit dessen Hilfe die Werkstücke nacheinander der oder den Bearbeitungsspindeln einer Bearbeitungszelle zugeführt werden. Es versteht sich von selbst, dass Sinnvollerweise bevorzugt nur solche Bearbeitungsschritte in einer Bearbeitungszelle zusammengefasst werden, die hinsichtlich ihrer Taktzeit und technologischen Anforderungen ähnlich sind, so dass die Auslastung aller Werkzeugspindeln einer Bearbeitungszelle annähernd gleich ist.

Da fertigungsbedingt die Werkstückaufnahmen eines Rundtisches geringe Fehler hinsichtlich ihrer Ausrichtung haben und/oder ihre Längsachsen nicht ganz genau parallel zur Drehachse des Rundtisches verlaufen, ist in erfindungsgemäßer Weiterbildung der erfindungsgemäßen Bearbeitungszelle vorgesehen, dass die Werkstückspindeln um die X-Achsen und/oder um die Y-Achse manuell oder motorisch schwenkbar sind. Dadurch wird gewährleistet, dass die Drehachse der Werkstückspindeln und die Längsachse der Werkstückaufnahmen trotz eventuell vorhandener Fertigungsungenauigkeit so zueinander ausgerichtet werden, wie es die Bearbeitung des Werkstücks erfordert.

Bei manchen Bearbeitungsschritten, beispielsweise wenn ein Kreuzschliff gewünscht wird oder eine Dichtfläche leicht ballig ausgeführt werden soll, kann es erforderlich sein, dass die Längsachse der Werkzeugspindeln und die Längsachse der Werkstückaufnahme um einen genau definierten Betrag voneinander abweichen. Auch in diesem Fall kann durch die getrennte motorische Verschwenkbarkeit der Werkzeugspindeln um die X-Achse und/oder um die Y-Achse das gewünschte Schliffbild beziehungsweise die gewünschte Balligkeit eingestellt werden.

Außerdem werden Fertigungsungenauigkeiten bei der Herstellung des Rundtisches beziehungsweise der Richtungsabweichungen der Längsachse der Werkstückaufnahme automatisch ausgeglichen, so dass das Bearbeitungsergebnis unabhängig von den genannten Ungenauigkeiten des Rundtisches ist.

Um den Transport der Werkstücke in die erfindungsgemäße Fertigungslinie und aus der erfindungsgemäßen Fertigungslinie heraus einerseits zu ermöglichen und andererseits den Transport der Werkstücke von einer Bearbeitungszelle zu einer anderen Bearbeitungszelle zu ermöglichen, ist eine Transporteinrichtung vorgesehen, die eine Führungsschiene umfasst. Auf der Führungsschiene ist mindestens ein Transportschlitten angeordnet, welcher eine oder mehrere Werkstückgreifer und/oder Werkstückwendeeinheiten aufweist.

Bevorzugt ist zwischen jeweils zwei Bearbeitungszellen ein Trägerschlitten vorgesehen, der aus einer Bearbeitungszelle das oder die Werkstücke entnimmt und einer benachbarten Bearbeitungszelle zuführt. Wenn zwei Bearbeitungszellen den gleichen Bearbeitungsschritt parallel zueinander ausführen, beispielsweise weil die Taktzeit dieses Bearbeitungsschrittes deutlich größer ist als die der übrigen Bearbeitungsschritte, die auf der erfindungsgemäßen Fertigungslinie ausgeführt werden, dann ist es auch möglich, dass die Werkstücke nicht von einer Bearbeitungszelle zu einer direkt benachbarten Bearbeitungszelle mit Hilfe der Transporteinrichtung transportiert werden, sondern zu einer weiter entfernten Bearbeitungszelle transportiert werden.

Weitere Vorteile und vorteilhafte Ausgestaltungen der Erfindung sind der Zeichnung, deren Beschreibung und den Patentansprüche entnehmbar. Alle in der Zeichnung, deren Beschreibung und den Patentansprüchen beschriebenen Merkmale können sowohl einzeln als auch in beliebiger Kombination miteinander erfindungswesentlich sein.

### Zeichnung

In der Zeichnung zeigen:
- Figur 1: eine isometrische Darstellung einer erfindungsgemäßen Fertigungslinie,
- Figur 2: eine Seitenansicht der erfindungsgemäßen Fertigungslinie,
- Figur 3: einen vergrößerten Ausschnitt aus Figur 1,
- Figur 4: eine Ansicht von oben auf die erfindungsgemäße Fertigungslinie in einer ersten Stellung, und
- Figur 5: eine Ansicht von oben auf die erfindungsgemäße Fertigungslinie in einer zweiten Stellung.

### Beschreibung der Ausführungsbeispiele

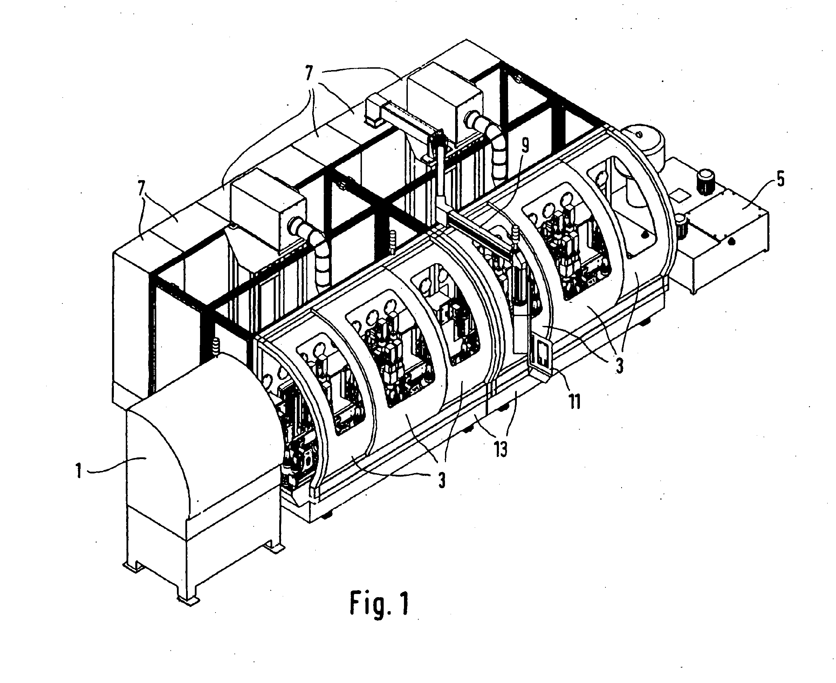

Figur 1 zeigt ein Ausführungsbeispiel einer erfindungsgemäßen Fertigungslinie. Auf der linken Seite der erfindungsgemäßen Fertigungslinie ist ein Beladeautomat 1 vorgesehen, mit dessen Hilfe die erfindungsgemäße Fertigungslinie mit Werkstücken beschickt wird. An dem in Figur 1 rechten Ende der Fertigungslinie ist ein Spülmittelaggregat 5 vorgesehen.

In dem in Figur 1 vorderen Teil der Fertigungslinie sind mehrere Bearbeitungszellen (ohne Bezugszeichen), die hinter einem Spritzschutz 3 angeordnet sind, in einer Reihe nebeneinander angeordnet. An dem in Figur 1 hinteren Ende der Fertigungslinie sind verschiedene Steuerschränke 7 nebeneinander angeordnet. Dabei dient jeder Steuerschrank dazu, die vor ihm liegenden Bearbeitungszellen anzusteuern. Selbstverständlich ist auch eine übergeordnete Steuerung, welche die verschiedenen Bearbeitungszellen der erfindungsgemäßen Fertigungslinie vernetzt und koordiniert steuert, erforderlich.

Über einen Ausleger 9 ist ein Steuerpult 11 mit den Steuerschränken 7 verbunden. Die Bearbeitungszellen und die Steuerschränke 7 sind auf einem Basismodul 13 angeordnet. Wenn die Fertigungslinie eine Vielzahl von Bearbeitungszellen umfasst, können auch zwei Basismodule 13 nebeneinander angeordnet werden. Selbstverständlich ist die Länge der erfindungsgemäßen Fertigungslinie nicht auf zwei Basismodule beschränkt, sondern es können je nach Bedarf so viele Basismodule und Bearbeitungszellen in einer Reihe nebeneinander angeordnet werden, wie es die Bearbeitung des Werkstücks erfordert.

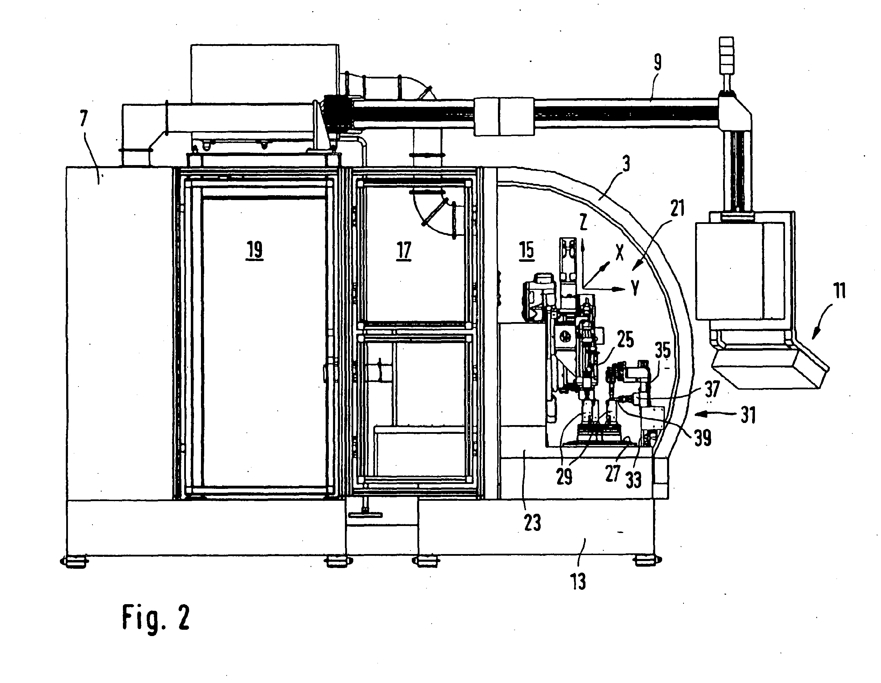

In Figur 2 ist eine Seitenansicht der erfindungsgemäßen Fertigungslinie dargestellt. Gleiche Bauteile werden mit den gleichen Bezugszeichen versehen und es gilt das bezüglich Figur 1 Gesagte entsprechend. In der Seitenansicht wird deutlich, dass die Fertigungslinie von vorne nach hinten in vier verschiedene Bereiche unterteilt werden kann. Der vorderste Bereich ist der sogenannte Nassraum 15, innerhalb dessen die eigentliche Bearbeitung des Werkstücks stattfindet. Der Spritzschutz 3 dient dazu, den Nassraum 15 von der Umgebung zu trennen, so dass Kühl- und Schmiermittel, welches bei der Bearbeitung der Werkstücke eingesetzt wird, nicht in die Umgebung gelangt. Hinter dem Nassraum 15 ist ein sogenannter Trockenraum 17 vorgesehen.

Zwischen den Schalt- und Steuerschränken 7 und dem Trockenraum 17 ist ein Wartungsgang 19 vorgesehen, der die Zugänglichkeit der Steuerschränke und auch der Bearbeitungszellen beziehungsweise der Bearbeitungsmodule verbessert.

In dem Nassraum 15 ist eine Bearbeitungszelle dargestellt, die in ihrer Gesamtheit mit dem Bezugszeichen 21 versehen ist. Eine erfindungsgemäße Fertigungslinie besteht aus mehreren Bearbeitungsstationen 21, die im Allgemeinen unterschiedliche Funktionen haben.

Die in Figur 2 sichtbare Bearbeitungszelle 21 hat ein Gestell 23, das mit dem Basismodul 13 verbunden ist. An dem Gestell 23 sind über Schlitten und Führungen (ohne Bezugszeichen) eine oder mehrere Werkzeugspindeln 25 hin und her bewegbar befestigt. Dabei können mehrere numerisch gesteuerte Bearbeitungsachsen in verschiedene Raumesrichtungen oder zur Durchführung von Drehbewegungen vorgesehen sein. Die Längsachse der Werkzeugspindel 25 verläuft in Richtung der Z-Achse. Selbstverständlich ist es möglich, dass die Bearbeitungsstation 21 nicht nur 3 NC-gesteuerte Achsen in Richtung der drei Raumesrichtungen aufweist. Es sind auch andere NC-Achsen zusätzlich möglich.

Unterhalb der Werkzeugspindel 25 ist ein Rundtisch drehbar und arretierbar auf dem Gestell 23 befestigt. An dem Rundtisch 27 können eine oder mehrere Werkstückaufnahmen 29 angeordnet sein. Die Werkstückaufnahmen 29 dienen, wie der Name bereits sagt, dazu, ein Werkstück (nicht dargestellt) aufzunehmen und in den Arbeitsbereich der Werkzeugspindel 25 zu bringen. In dieser Position wird der Rundtisch 27 arretiert und die Bearbeitung kann durchgeführt werden.

Bei der erfindungsgemäßen Bearbeitungszelle 21 ist vorgesehen, dass die Werkzeugspindel 25 um die X-Achse und um die Y-Achse verschwenkt oder gekippt werden kann, so dass die Richtungen der Längsachse der Werkzeugspindel 25 und die Längsachse der Werkstückaufnahme 29 einen definierten Winkel zueinander haben

In der Regel wird man die Werkzeugspindel 25 so ansteuern, dass sie parallel zur Werkstückaufnahme verläuft. Bei besonderen Anforderungen an das Werkstück kann es jedoch auch vorteilhaft sein, wenn die beiden Achsen beziehungsweise Richtungen einen Winkel zueinander einschließen. Dadurch ist es insbesondere auch möglich, die Fluchtungsfehler der Werkstückaufnahme 29 nach der Fertigstellung des Rundtisches 27 und der Werkzeugaufnahmen 29 zu vermessen und diese Fertigungsungenauigkeiten als Korrekturwert der Maschinensteuerung zur Verfügung zu stellen. Dadurch kann für jede Werkzeugaufnahme 25, die sich gerade im Arbeitsbereich der Werkzeugspindel 25 befindet, eine entsprechende Korrektur der Richtung der Längsachse der Werkzeugspindel 25 vorgenommen werden, so dass im Ergebnis die Fertigungsungenauigkeiten der Werkstückaufnahme 29 und des Rundtisches 27 kompensiert werden können.

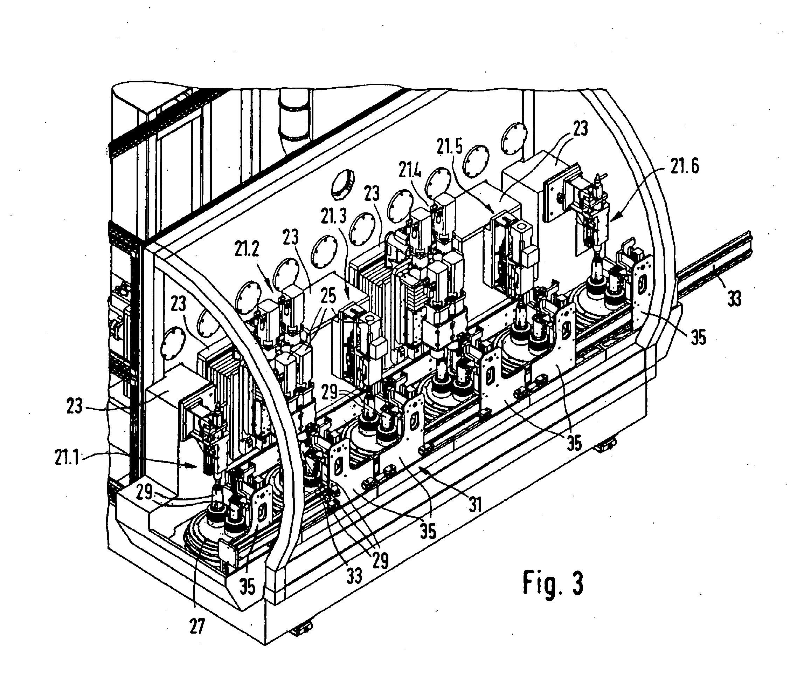

Vor der Bearbeitungszelle 21 ist eine Transporteinrichtung 31, die eine Führungsschiene 33 und einen Transportschlitten 35 mit einer Wendeinheit 37 und einem Werkstückgreifer 39 umfasst. In Figur 3 ist ein Ausschnitt aus einer erfindungsgemäßen Fertigungslinie, bestehend aus sechs Arbeitsstationen etwas vergrößert und ohne Spritzschutz 3 dargestellt.

Die Werkstücke (nicht dargestellt) durchlaufen die Fertigungslinie von links nach rechts. Die erste Bearbeitungszelle ist eine Vormessstation 41, in der die Werkstücke vor der Bearbeitung vermessen werden. Die Ergebnisse der Vormessstation 41 werden an die maschineninterne Steuerung weitergeleitet und verarbeitet, so dass bei der Bearbeitung des Werkstücks in den nachfolgenden Bearbeitungszellen in kürzester Zeit die gewünschten Endmasse erreicht werden. Fehlerhafte Werkstücke können außerdem von der Vormessstation 41 erkannt werden, so dass sie aussortiert werden können.

Der Rundtisch 27 der Vormessstation 41 weist zwei Werkstückaufnahmen 29 auf. Dadurch ist es möglich, dass ein Werkstück vermessen wird, während gleichzeitig aus der anderen Werkstückaufnahme das bereits vermessene Werkstück entnommen und ein neues Werkstück eingelegt wird. Das Be- und Entladen des Rundtisches 27 der Vormessstation 41 erfolgt ebenso wie das Be- und Entladen der anderen Bearbeitungszellen 2 - 21.6 mit Hilfe der Transporteinrichtung 31, die eine Führungsschiene 33 sowie mehrere Transportschlitten 35 umfasst. Die Transportschlitten 35 sind mit einem Linearantrieb oder einem anders gearteten Antrieb versehen, so dass sie ein Werkstück aus einer Bearbeitungszelle entnehmen können und zu der benachbarten Bearbeitungszelle transportieren und dort in die zugehörige Werkstückaufnahme 29 des Rundtisches 27 einlegen können.

Es ist auch möglich, ein Werkstück nicht an die direkt benachbarte Bearbeitungszelle zu übergeben, sondern beispielsweise an eine weiter entfernte Bearbeitungszelle zu übergeben. Dies kann dann sinnvoll und vorteilhaft sein, wenn zwei Bearbeitungszellen parallel zueinander an verschiedenen Werkstücken die gleichen Bearbeitungsschritte ausführen, weil die Taktzeit dieses Bearbeitungsschrittes deutlich größer ist als die der übrigen Bearbeitungsschritte in den anderen Bearbeitungszellen. Dadurch ist es möglich, den Durchsatz durch die Fertigungslinie im Idealfall zu verdoppeln, obwohl nur eine zusätzliche Bearbeitungszelle benötigt wird.

Die rechts neben der Vormessstation 21.1 angeordnete Bearbeitungszelle 21.2 weist zwei Werkzeugspindeln 25 und einen Rundtisch 27 mit insgesamt drei Werkstückaufnahmen 29 auf, so dass in einer Aufspannung des Werkstücks (nicht dargestellt) nacheinander zwei Bearbeitungsschritte in der Bearbeitungszelle 21.2 durchgeführt werden können.

Während die Werkstücke bearbeitet werden, befindet sich die dritte Werkstückaufnahme 29 im Arbeitsbereich der Transportschlitten beziehungsweise einer daran angeordneten Wendeeinheit 37 oder eines daran angeordneten Werkstückgreifers (ohne Bezugszeichen) und kann entweder umgedreht beziehungsweise gewendet werden oder es kann ein neues Werkstück eingelegt werden oder ein fertig bearbeitetes Werkstück entnommen und zur benachbarten Bearbeitungszelle 21.3 weitertransportiert werden. Die rechts neben der Bearbeitungszelle 21.2 angeordnete Bearbeitungszelle 21.3 hat nur eine Werkzeugspindel 29 und einen Rundtisch (ohne Bezugszeichen) mit zwei Werkstückaufnahmen 29.

In der Bearbeitungszelle 21.3 wird eine Bürstentgratung vorgenommen. Die Bearbeitungszellen 21.4 und 21.5 entsprechen in ihrem Aufbau den Arbeitsstationen 21.2 und 21.3. Am Ende des in Figur 3 dargestellten Abschnitts der Fertigungslinie ist eine Nachmessstation 21.6 vorgesehen, in der die bearbeiteten Werkstücke vermessen werden. Eventuelle Abweichungen der gemessenen Ist-Werten von den Soll-Werten werden an die Maschinensteuerung übermittelt und können so in entsprechende Korrekturgrößen bei der Bearbeitung der nachfolgenden Werkstücke umgesetzt werden, so dass die Fertigungsqualität der auf der erfindungsgemäßen Fertigungslinie hergestellten Werkstücke konstant sehr hoch ist und nur innerhalb sehr kleiner Grenzen voneinander abweichen.

Es versteht sich von selbst, dass die erfindungsgemäße Fertigungslinie nicht auf sechs Bearbeitungszellen in der in Figur 3 dargestellten Konfiguration beschränkt ist, sondern dass ein wesentliches Merkmal der erfindungsgemäßen Fertigungslinie darin besteht, dass modulare Bearbeitungszellen, die jede für sich besondere Eigenschaften aufweist und einen oder wenige Bearbeitungsschritte ausführen kann, in einer Reihe angeordnet werden kann und für die Bearbeitung eines Werkstücks mit sehr hoher Präzision in einer großen Stückzahl konfiguriert werden kann.

Wenn die Fertigung eines Werkstücks eingestellt werden kann und ein anderes Werkstück bearbeitet werden soll, kann die Fertigungslinie auseinander gebaut und die vorhandenen Bearbeitungszellen beim Aufbau einer anderen Fertigungslinie, die zur Herstellung eines anderen Werkstücks dienen soll, eingesetzt werden. Selbstverständlich ist es auch möglich, einzelne Bearbeitungszellen aus der Fertigungslinie auszuwechseln und durch andere zu ersetzen. Dadurch kann mit geringem Aufwand die Leistungsfähigkeit der gesamten Fertigungslinie erhöht werden, wenn beispielsweise die Bearbeitungszelle mit der größten Taktzeit durch eine neue Bearbeitungszelle mit einer kleineren Taktzeit ersetzt wird.

Für den Hersteller der erfindungsgemäßen Fertigungslinie ergeben sich darüber hinaus erhebliche Vorteile bei den Herstellungskosten, da nicht jedes Bearbeitungszentrum einen Einzelanfertigung ist, die individuell auf die Wünsche des Kunden zugeschnitten werden muss, sondern der Hersteller kann aus den vorhandenen Typen von Bearbeitungszellen die jeweils am besten geeigneten Stationen zu einer Fertigungslinie zusammengestellt werden. In der Regel wird man lediglich die Werkstückaufnahmen 29 als Sonderanfertigung für das zu produzierende Werkstück herstellen.

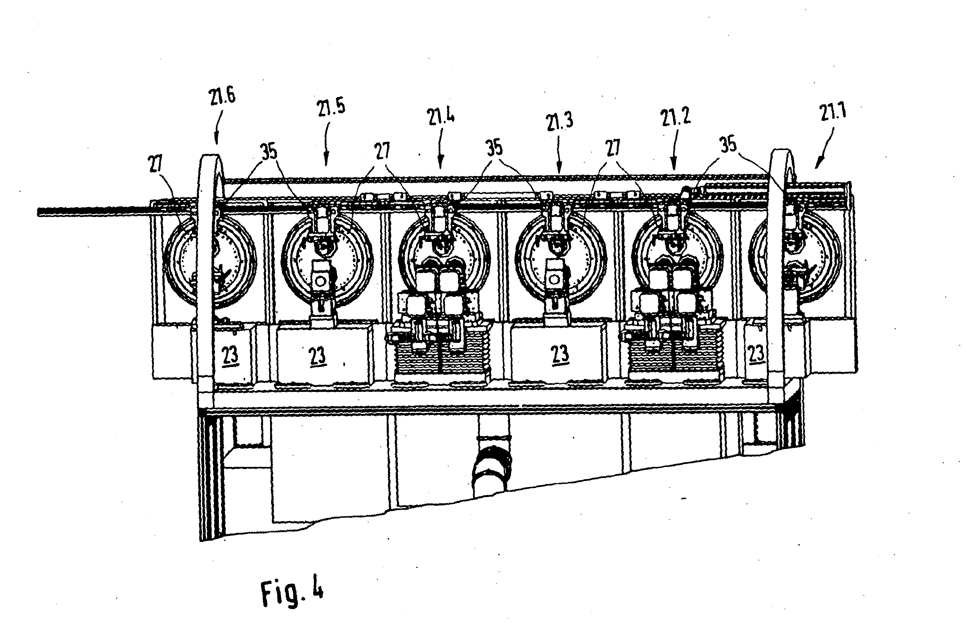

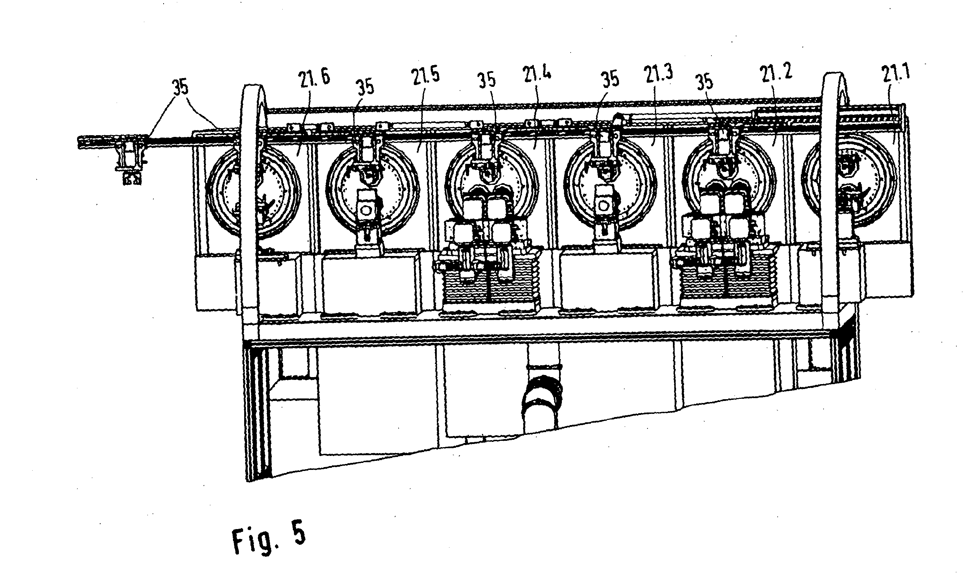

In Figur 3 ist eine Ansicht von oben auf die erfindungsgemäße Fertigungslinie gemäß Figur 3 dargestellt. Dabei sind die Transportschlitten 35 so angeordnet, dass die Rundtische 27 beziehungsweise die darauf angeordnete Werkstückaufnahme 29 (nicht sichtbar in Figur 4) mit einem Werkstück beladen werden. In Figur 5 ist die gleiche Fertigungslinie dargestellt, wobei die Transportschlitten 35 in der Stellung dargestellt sind, in der die Werkstücke entladen werden. Dies bedeutet gegenüber der Darstellung von Figur 4, dass die Transportschlitten 35 in Bearbeitungsrichtung eine Zelle weiter gewandert sind.

## Patentansprüche

1. Fertigungslinie zur Herstellung von Werkstücken, mit mehreren in einer Reihe nebeneinander angeordneten Bearbeitungszellen (21) und mit einer Transporteinrichtung (31) zum Transport des oder der Werkstücke in und aus den Bearbeitungszellen (21), **dadurch gekennzeichnet, dass** alle Bearbeitungszellen (21) einer Fertigungslinie auf einem Basismodul (13) angeordnet sind, dass die Transporteinrichtung (31) eine Führungsschiene (33) umfasst, dass sich die Führungsschiene (33) mindestens über die gesamte Länge des Basismoduls (13) erstreckt, und dass auf der Führungsschiene (33) mindestens ein Transportschlitten (35) angeordnet ist.

2. Fertigungslinie nach Anspruch 1, **dadurch gekennzeichnet, dass** das Basismodul (13) ein Raster aufweist, und dass eine Breite der Bearbeitungszellen (21) dem Rastermaß oder einem ganzzahligen Vielfachen des Rastermaßes des Basismoduls (13) entspricht.

3. Fertigungslinie nach Anspruch 2, **dadurch gekennzeichnet, dass** das Rastermaß des Basismoduls (13) z. B. 600 mm beträgt.

4. Fertigungslinie nach einem der vorhergehenden Ansprüche, **dadurch gekennzeichnet, dass** in mindestens einer Bearbeitungszelle (21) die Bearbeitung des Werkstücks durch spanende Bearbeitungsverfahren, wie zum Beispiel Drehen, Bohren, Fräsen, Schleifen, Finshen und/oder Honen erfolgt.

5. Fertigungslinie nach einem der vorhergehenden Ansprüche, **dadurch gekennzeichnet, dass** in mindestens einer Bearbeitungszelle (21) die Bearbeitung des Werkstücks durch nicht-spanende Bearbeitungsverfahren, wie zum Beispiel Bürstentgraten, Erodieren, Rollieren, Gravieren, Lasern und/oder Umformen erfolgt.

6. Fertigungslinie nach einem der vorhergehenden Ansprüche, **dadurch gekennzeichnet, dass** mindestens eine Bearbeitungszelle eine oder mehrere Werkzeugspindeln (25) aufweist, und dass die Werkzeugspindeln (25) zur Aufnahme und zum Antrieb eines Werkzeugs dienen.

7. Fertigungslinie nach einem der vorhergehenden Ansprüche, **dadurch gekennzeichnet, dass** mindestens eine Bearbeitungszelle (21) einen Rundtisch (27) mit mehreren Werkstückaufnahmen (29) aufweist.

8. Fertigungslinie nach Anspruch 6 und 7, **dadurch gekennzeichnet, dass** die Werkzeugspindeln (25) um die X-Achse und/ oder um die Y-Achse schwenkbar sind.

9. Fertigungslinie nach Anspruch 8, **dadurch gekennzeichnet, dass** die Schwenkbewegung der Werkzeugspindeln (25) um die X-Achse und/ oder um die Y-Achse von der Maschinensteuerung durch Ansteuern eines oder mehrerer Aktuatoren ausgeführt wird.

10. Fertigungslinie nach einem der vorhergehenden Ansprüche, **dadurch gekennzeichnet, dass** in mindestens einer Bearbeitungszelle (21) das Werkstück vermessen wird.

11. Fertigungslinie nach einem der vorhergehenden Ansprüche, **dadurch gekennzeichnet, dass** der mindestens eine Transportschlitten (35) eine oder mehrere Werkstückgreifer (39) und/oder Werkstückwendeeinheiten (37) aufweist.

12. Fertigungslinie nach einem der vorhergehenden Ansprüche, **dadurch gekennzeichnet, dass** der mindestens eine Transportschlitten (35) ein oder mehrere Werkstücke in eine Werkstückaufnahme (29) einer Bearbeitungszelle (21) einführen kann, und dass der mindestens eine Transportschlitten (35) ein oder mehrere Werkstücke aus einer Werkstückaufnahme (29) entnehmen kann.

13. Fertigungslinie nach einem der vorhergehenden Ansprüche, , **dadurch gekennzeichnet, dass** der mindestens eine Transportschlitten (35) ein oder mehrere Werkstücke aus einem Werkstückgreifer (39) und/oder einer Werkstückwendeeinheit (37) eines anderen Transportschlittens (35) entnehmen kann und/oder in den Werkstückgreifer (39) und/oder in eine Werkstückwendeeinheit (37) eines anderen Transportschlittens (35) einführen kann.

14. Fertigungslinie nach einem der vorhergehenden Ansprüche, **dadurch gekennzeichnet, dass** an einem Ende der Fertigungslinie ein Beladeautomat (1) zum Beladen der Transporteinrichtung (31) vorgesehen ist.

## Claims

1. Production line for manufacturing workpieces, comprising a plurality of machining cells (21), which are arranged side by side in a row, and comprising a transport means (31) for transporting the workpiece or workpieces into and out of the machining cells (21), **characterised in that** all of the machining cells (21) of a production line are arranged on a base module (13), **in that** the transport means (31) comprises a guide rail (33), **in that** the guide rail (33) extends at least over the whole length of the base module (13), and **in that** at least one transport slide (35) is arranged on the guide rail (33).

2. Production line according to claim 1, **characterised in that** the base module (13) has a grid, and **in that** the width of the machining cells (21) corresponds to the grid dimension or an integer multiple of the grid dimension of the base module (13).

3. Production line according to claim 2, **characterised in that** the grid dimension of the base module (13) is, for example, 600 mm.

4. Production line according to any one of the preceding claims, **characterised in that** in at least one machining cell (21), the machining of the workpiece takes place by means of cutting machining processes, such as lathing, drilling, milling, grinding, finishing and/or honing.

5. Production line according to any one of the preceding claims, **characterised in that** in at least one machining cell (21), the machining of the workpiece takes place by means of non-cutting processes, such as brush trimming, erosion, drumming, engraving, lasering and/or recasting.

6. Production line according to any one of the preceding claims, **characterised in that** at least one machining cell has one or more tool shafts (25,) and **in that** the tool shafts (25) serve to receive and to drive a tool.

7. Production line according to any one of the preceding claims, **characterised in that** at least one machining cell (21) has a circular table (27) with a plurality of workpiece sockets (29).

8. Production line according to claim 6 and claim 7, **characterised in that** the tool shafts (25) are pivotable about the X-axis and/or about the Y-axis.

9. Production line according to claim 8, **characterised in that** the pivoting motion of the tool shafts (25) about the X-axis and/or about the Y-axis is carried out by the machine control system by driving one or more actuators.

10. Production line according to any one of the preceding claims, **characterised in that** the workpiece is measured in at least one of the machining cells (21).

11. Production line according to any one of the preceding claims, **characterised in that** the at least one transport slide (35) has one or more workpiece grippers (39) and/or workpiece rotating units (37).

12. Production line according to any one of the preceding claims, **characterised in that** the at least one transport slide (35) can introduce one or more workpieces into a workpiece socket (29) of a machining cell (21), and **in that** the at least one transport slide (35) can remove one or more workpieces from a workpiece socket (29).

13. Production line according to any one of the preceding claims, **characterised in that** the at least one transport slide (35) can remove one or more workpieces from a workpiece gripper (39) and/or a workpiece rotating unit (37) of another transport slide (35) and/or introduce said one or more workpieces into the workpiece gripper (39) and/or into a workpiece rotating unit (37) of another transport slide (35).

14. Production line according to any one of the preceding claims, **characterised in that** a loading machine (1) for loading the transport means (31) is provided at one end of the production line.

## Revendications

1. Chaîne de fabrication de pièces, comportant une pluralité de cellules d'usinage (21) alignées les unes à côté des autres et un dispositif de transport (31) pour introduire la ou les pièces d'oeuvre dans les cellules d'usinage (21) ou la ou les en extraire, **caractérisée en ce que** toutes les cellules d'usinage (21) d'une chaîne de fabrication sont agencées sur un module de base (13), **en ce que** le dispositif de transport (31) comporte un rail de guidage (33), **en ce que** le rail de guidage (33) s'étend sur au moins toute la longueur du module de base (13) et **en ce qu'**au moins un chariot de transport (35) est agencé sur le rail de guidage (33).

2. Chaîne de fabrication de pièces selon la revendication 1, **caractérisée en ce que** le module de base (13) présente une trame et **en ce qu'**une largeur des cellules d'usinage (21) correspond à la dimension de trame ou à un multiple entier de la dimension de trame du module de base (13).

3. Chaîne de fabrication de pièces selon la revendication 2, **caractérisée en ce que** la dimension de trame du module de base (13) est de 600 mm par exemple.

4. Chaîne de fabrication de pièces selon l'une quelconque des revendications précédentes, **caractérisée en ce que** dans au moins une cellule d'usinage (21), l'usinage de la pièce d'oeuvre s'effectue selon des procédés d'usinage avec enlèvement de matière, comme le tournage, le perçage, le fraisage, la rectification, la finition et/ou le pierrage.

5. Chaîne de fabrication de pièces selon l'une quelconque des revendications précédentes, **caractérisée en ce que** dans au moins une cellule d'usinage (21), l'usinage de la pièce d'oeuvre est effectué selon des procédés d'usinage sans enlèvement de matière comme l'ébavurage à la brosse, l'érosion, le tonnelage, le gravage, l'usinage laser et/ou la déformation.

6. Chaîne de fabrication de pièces selon l'une quelconque des revendications précédentes, **caractérisée en ce qu'**au moins une cellule d'usinage comporte une ou plusieurs broches porte-outil (25) et **en ce que** les broches porte-outil (25) servent à recevoir et entraîner un outil.

7. Chaîne de fabrication de pièces selon l'une quelconque des revendications précédentes, **caractérisée en ce qu'**au moins une cellule d'usinage (21) comporte une table circulaire (27) avec plusieurs logements de pièce (29).

8. Chaîne de fabrication de pièces selon la revendication 6 et la revendication 7, **caractérisée en ce que** les broches porte-outil (25) peuvent pivoter autour de l'axe X et/ou autour de l'axe Y.

9. Chaîne de fabrication de pièces selon la revendication 8, **caractérisée en ce que** le mouvement de pivotement des broches porte-outil (25) autour de l'axe X et/ou de l'axe Y est commandé par le système de commande de la machine par pilotage d'un ou plusieurs actionneurs.

10. Chaîne de fabrication de pièces selon l'une quelconque des revendications précédentes, **caractérisée en ce que** la pièce d'oeuvre est mesurée dans au moins une cellule d'usinage (21).

11. Chaîne de fabrication de pièces selon l'une quelconque des revendications précédentes, **caractérisée en ce que** le ou les chariots de transport (35) comportent une ou plusieurs pinces de préhension de pièce (39) et/ou unités de retournement de pièce (37).

12. Chaîne de fabrication de pièces selon l'une quelconque des revendications précédentes, **caractérisée en ce que** le ou les chariots de transport (35) peuvent introduire une ou plusieurs pièces d'oeuvre dans un logement de pièce (29) d'une cellule d'usinage (21) et **en ce que** le ou les chariots de transport (35) peuvent retirer une ou plusieurs pièces d'oeuvre d'un logement de pièce (29).

13. Chaîne de fabrication de pièces selon l'une quelconque des revendications précédentes, **caractérisée en ce que** le ou les chariots de transport (35) peuvent retirer une ou plusieurs pièces d'oeuvre d'une pince de préhension de pièce (39) et/ou d'une unité de retournement de pièce (37) d'un autre chariot de transport (35) et/ou la ou les introduire dans la pince de préhension de pièce (39) et/ou une unité de retournement de pièce (37) d'un autre chariot de transport (35).

14. Chaîne de fabrication de pièces selon l'une quelconque des revendications précédentes, **caractérisée en ce qu'**un automate de chargement (1) est prévu à une extrémité de la chaîne de fabrication pour charger le dispositif de transport (31).
